## Europäisches Patentamt
## European Patent Office
## Office européen des brevets

(11) Veröffentlichungsnummer : **0 058 836**
**B1**

(12) **EUROPÄISCHE PATENTSCHRIFT**

(45) Veröffentlichungstag der Patentschrift :
26.06.85

(51) Int. Cl.⁴ : **G 21 C   1/08**

(21) Anmeldenummer : **82100584.0**

(22) Anmeldetag : **28.01.82**

(54) **Druckhaltesystem einer Druckwasserreaktoranlage.**

(30) Priorität : **19.02.81 DE 3106083**

(43) Veröffentlichungstag der Anmeldung :
**01.09.82 Patentblatt 82/35**

(45) Bekanntmachung des Hinweises auf die Patenterteilung : **26.06.85 Patentblatt 85/26**

(84) Benannte Vertragsstaaten :
**AT CH DE FR GB IT LI**

(56) Entgegenhaltungen :
**DE-A- 1 936 844**
**GB-A- 1 162 707**
**US-A- 3 060 110**
**US-A- 3 095 012**
**US-A- 3 114 414**

(73) Patentinhaber : **BROWN BOVERI REAKTOR GmbH**
**Dudenstrasse 44**
**D-6800 Mannheim 1 (DE)**

(72) Erfinder : **Sander, Michael, Dipl.-Ing./Dr. Ing.**
**Fliederweg 6**
**D-6102 Pfungstadt-Eschollbrücken (DE)**

(74) Vertreter : **Dahlmann, Gerhard, Dipl.-Ing. et al**
**c/o Brown Boveri & Cie., AG Zentralbereich ZPT/P**
**Postfach 351**
**D-6800 Mannheim (DE)**

Jouve, 18, rue St-Denis, 75001 Paris, France

## Beschreibung

Die Erfindung betrifft ein Druckhaltesystem einer Druckwasserreaktoranlage mit einem Druckhalter, der einen Wasser- und einen Dampfraum aufweist, wobei der Wasserraum mit einer von einem Reaktordruckbehälter zu einem Dampferzeuger führenden Primärkühlmittelleitung (« heiße » Leitung) über eine Einspeiseleitung und der Dampfraum mit einer vom Dampferzeuger zum Reaktordruckbehälter führenden Primärkühlmittelleitung (« kalte » Leitung) über eine Sprühleitung verbunden ist, wobei die Durchflußmenge der Einspeiseleitung in Richtung Druckhalter gedrosselt ist und wobei zwischen der « kalten » Leitung und dem Druckhalter eine kontinuierlich in den Dampfraum sprühende Verbindung vorgesehen ist.

Ein derartiges Druckhaltesystem ist aus der US-A 3 060 110. Dort wird ein Teil des von der « heißen » Leitung weggeführten Primärkühlmittels in den Wasserraum und ein weiterer Teil unmittelbar in den Dampfraum eines Druckhalters eingespeist. Bei einer Volumendehnung im Primärkühlkreislauf wird also Medium aus der « heißen » Leitung in den Dampfraum des Druckhalters eingesprüht. Da dasselbe um ca. 30 °C wärmer ist als das in der « kalten » Leitung strömende Medium reicht bei Druckanstiegstransienten möglicherweise die Dampfkondensationskapazität dieses Sprühpotentials nicht aus, um die gleichzeitig in den Wasserraum gedrückte Menge ohne nennenswerten Druckanstieg im Druckhalter aufnehmen zu können. Durch die in Spalte 4, Zeile 48 bis 64 der US-A 3 060 110 aufgezeigten Alternativen wird dem Dampfraum eine zu große Menge kälteres Kühlmittel zugeführt, so daß für die Druckhalter-Einbauten schädliche Temperaturschocks nicht auszuschließen sind.

Aus der US-A 3 114 414 ist eine von der « kalten » Primärkühlmittelleitung wegführende Sprühleitung bekannt. Sie ist mit einem Ventil versehen, das ein kontinuierliches oder stoßweises Sprühen ermöglicht. Auch hier sind wegen der großen Menge des relativ kalten Kühlmittels insbesondere beim stoßweisen Betrieb Temperaturschocks nicht auszuschließen.

Bei einem aus dem Buch « VGB-Kernkraftwerksseminar 1970 », Seite 25 bekannten Druckhaltesystem ist bei Druckanstiegstransienten die in den Dampfraum eingesprühte Kühlmittelmenge verhältnismäßig klein gegenüber der über die Einspeiseleitung in den Wasserraum gedrückten Kühlmittelmenge. Daher reicht die Dampfkondensationskapazität der eingesprühten Menge nicht aus um die in den Wasserraum gedrückte Menge ohne nennenswerten Druckanstieg im Druckhalter aufnehmen zu können.

Es ist die Aufgabe der Erfindung allein von der « kalten » Leitung stammendes Medium zum Einsprühen zu verwenden und zur Vermeidung von Schockwirkungen nur die der jeweiligen Betriebslage entsprechende Menge an Sprühmedium in den Dampfraum einzuführen.

Gelöst wird die Aufgabe erfindungsgemäß dadurch, daß der durch die Drosselung vorhandene Überschuß an Primärkühlmittel wenigstens teilweise über die von der « kalten » Leitung wegführende Sprühleitung in den Dampfraum des Druckhalters geleitet wird, daß die Sprühleitung mehrere Teilstränge unterschiedlichen Querschnitts aufweist, daß jeder dieser Teilstränge mit einem Ventil versehen ist, das in Abhängigkeit des in der « heißen » Leitung herrschenden Druckes steuerbar ist und daß die Teilstränge vor Erreichen des Druckhalters wieder als eine gemeinsame Sprühleitung fortgeführt sind.

Durch die dosierte Zuführung von Sprühmedium ist es gelungen die Gefahr einer Schockwirkung zu mindern und trotzdem eine ausreichende Dampfkondensation herbeizuführen. Die vorgeschlagene Art der Ventilansteuerung ist deshalb günstig, weil der Primärsystemdruck wegen des Durchflußwiderstandes in der Einspeiseleitung des Druckhalters bei Druckanstiegstransienten schneller steigt als der Druck im Druckhalter.

Gemäß einer besonderen Ausgestaltung des Druckhaltesystems sind die Ventile des Sprühsystems als Sicherheitsventile ausgebildet. Dadurch wird ein unerwünschtes Nichtöffnen der Ventile und somit ein unzulässiger Druckanstieg im Primärsystem vermieden.

Die Durchflußmenge der Einspeiseleitung ist derart eingestellt, daß der über das Sprühsystem in den Druckhalter eingesprühte Anteil so viel Dampf kondensiert, daß der noch über die Einspeiseleitung in den Druckhalter gelangende Anteil ohne Druckanstieg aufgenommen wird.

Eine andere Lösung der Aufgabe sieht vor, daß eine Sprühleitung saugseitig und eine Sprühleitung druckseitig einer Primärkühlmittelpumpe von der « kalten » Leitung weggeführt ist, daß in der saugseitig weggeführten Sprühleitung eine Rückschlagklappe vorgesehen ist, daß die druckseitig weggeführte Sprühleitung in Durchflußrichtung gesehen hinter der Rückschlagklappe mit der saugseitig weggeführten Sprühleitung verbunden ist, daß zwischen der saug- und der druckseitig weggeführten Sprühleitung eine Verbindungsleitung vorgesehen ist, die zwischen der Einmündung der Sprühleitung und der Rückschlagklappe in die saugseitig weggeführte Sprühleitung eingebunden ist und daß in die Verbindungsleitung ein vom Druck des in der « heißen » Leitung strömenden Mediums gesteuertes Ventil eingebaut ist.

Mit dieser Lösung ist eine Feinregulierung der Druckverhältnisse im Druckhalter bei geschlossener Rückschlagklappe möglich.

Anhand der schematischen Zeichnungen Fig. 1 bis 4 werden verschiedene Ausführungsbeispiele des erfindungsgemäßen Druckhaltesystems beschrieben.

Dabei zeigt

Figur 1 das Primärsystem einer Druckwasserreaktoranlage mit einem in größerem Maßstab dargestellten Druckhalter und

Figuren 2-3 das Primärsystem nach Fig. 1 mit verschiedenen Varianten des Druckhaltersprühsystems.

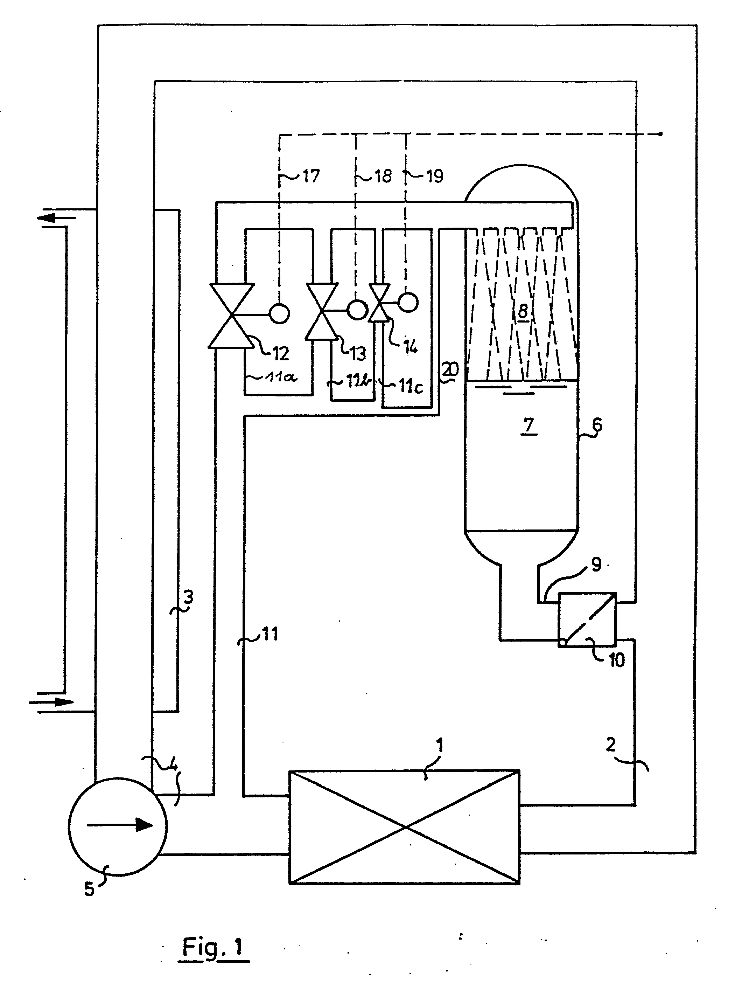

Ein als Primärkühlmittel dienendes Wasser durchströmt den Reaktordruckbehälter 1 und verläßt diesen über eine « heiße » Leitung 2 bezeichnete Primärkühlmittelleitung. Nachdem das Primärkühlmittel unter Abgabe eines Teils seiner Wärme einen Dampferzeuger 3 durchströmt hat, gelangt es über eine nunmehr als « kalte » Leitung 4 bezeichnete Primärkühlmittelleitung unter Zwischenschaltung einer Primärkühlmittelpumpe 5 wieder zum Reaktordruckbehälter 1. Obwohl eine Druckwasserreaktoranlage mehrere solcher Primärkreisschleifen aufweist, ist aus Gründen der besseren Übersicht nur eine Schleife dargestellt. Ein heizbarer Druckhalter 6, der einen Wasser- 7 und einen Dampfraum 8 aufweist, ist über eine in der Wasserraum 7 mündende Einspeiseleitung 9 mit der « heißen » Leitung 2 verbunden. Die Einspeiseleitung ist mit einer durchbohrten Rückschlagklappe 10 versehen, die derart ausgebildet ist, daß der Durchfluß von der « heißen » Leitung 2 zum Druckhalter 6 gedrosselt ist, eine Durchflußbehinderung vom Druckhalter zur « heißen » Leitung jedoch nicht auftritt. Der durch die Drosselung anstehende Überschuß an Primärkühlmittelvolumen wird zwangsläufig über die Sprühleitung 11 in den Dampfraum 8 des Druckhalters eingespeist. Dabei ist der Durchflußwiderstand derart eingestellt, daß die über das Sprühsystem in den Druckhalter gelangende Menge so viel Dampf kondensiert, daß das noch über die Einspeiseleitung 9 in den Druckhalter 6 gelangende Volumen ohne Druckanstieg aufgenommen wird. Berechnungen haben ergeben, daß zur Erreichung des Zieles durch die Drosselung ca. zwei Drittel des normalerweise über die Einspeiseleitung in den Wasserraum gelangenden Volumens über das Sprühsystem in den Druckhalter eingespeist wird. Um sicherzustellen, daß nur die aufgrund des im Primärsystem herrschenden Druckes erforderliche Menge in den Dampfraum 8 eingesprüht wird, wird gemäß Fig. 1 die Sprühleitung 11 in einem Teilbereich ihres Verlaufs in Teilsträngen 11a, b und c ausgebildet. Dabei sind die Durchmesser der Teilstränge und die Ansprechdrücke der darin vorgesehenen Ventile 12, 13, 14 gestaffelt. Vor Erreichen des Druckhalters sind die Teilstränge wieder als eine gemeinsame Sprühleitung 11 fortgeführt. Der Teilstrang 11b weist einen geringeren Durchflußquerschnitt auf als der Teilstrang 11a und der Teilstrang 11c einen geringeren Durchflußquerschnitt als der Teilstrang 11b. Den Ventilen 12, 13, 14 sind Druckgrenzwerte 17, 18, 19 des Primärsystems und zwar an einer Stelle der « heißen » Leitung 2, die in Durchflußrichtung gesehen hinter dem Abzweig der Einspeiseleitung 9 liegt, zugeordnet. Sie sind in Abhängigkeit des Durchflußquerschnitts der ihnen zugeordneten Leitungen auf unterschiedliche Grenzwerte eingestellt und sprechen daher bei verschiedenen Drücken an, so daß eine optimale Sprühung erfolgt. Die dritte Bypaßleitung 20 besitzt kein Ventil und dient als Dauersprühleitung gemäß dem Stand der Technik.

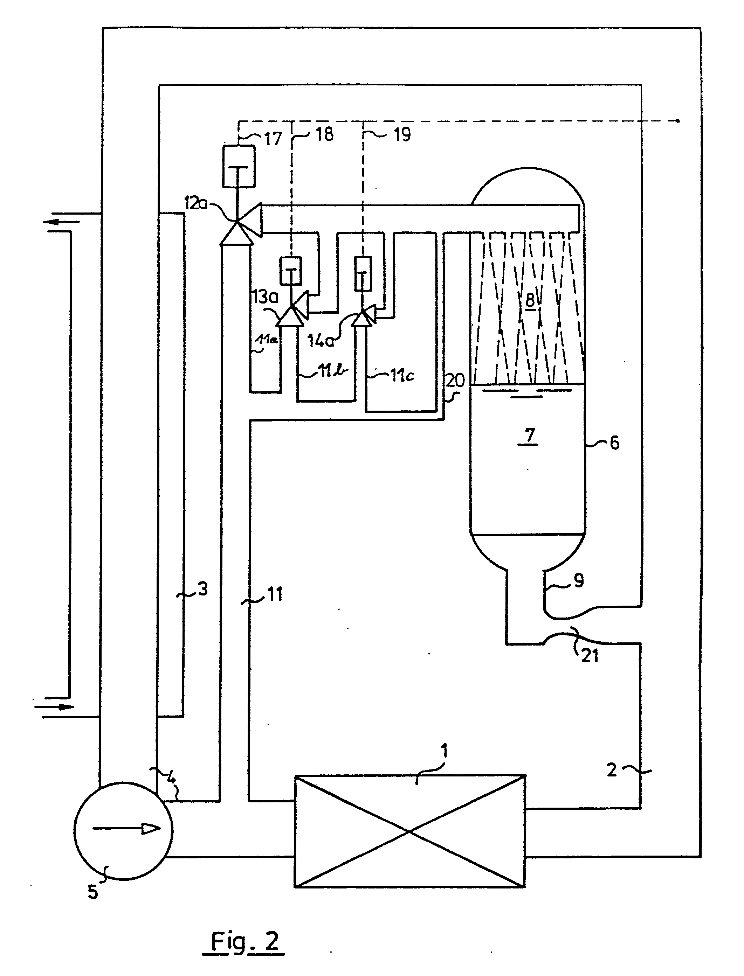

Nach der in Fig. 2 dargestellten Ausbildung ist die Drosselstelle der Einspeiseleitung 9 als Venturirohr 21 ausgebildet. Die Ventile in den Teilsträngen 11a, 11b und 11c sind als Sicherheitsventile 12a, 13a, 14a ausgebildet. Sie sind über Druckmessungen 17, 18, 19 mit dem Primärsystem verbunden und sprechen bei gestaffelten Ansprechdrücken an. Durch die Verwendung von Sicherheitsventilen wird ein Nichtansprechen der Ventile im Anforderungsfall vermieden.

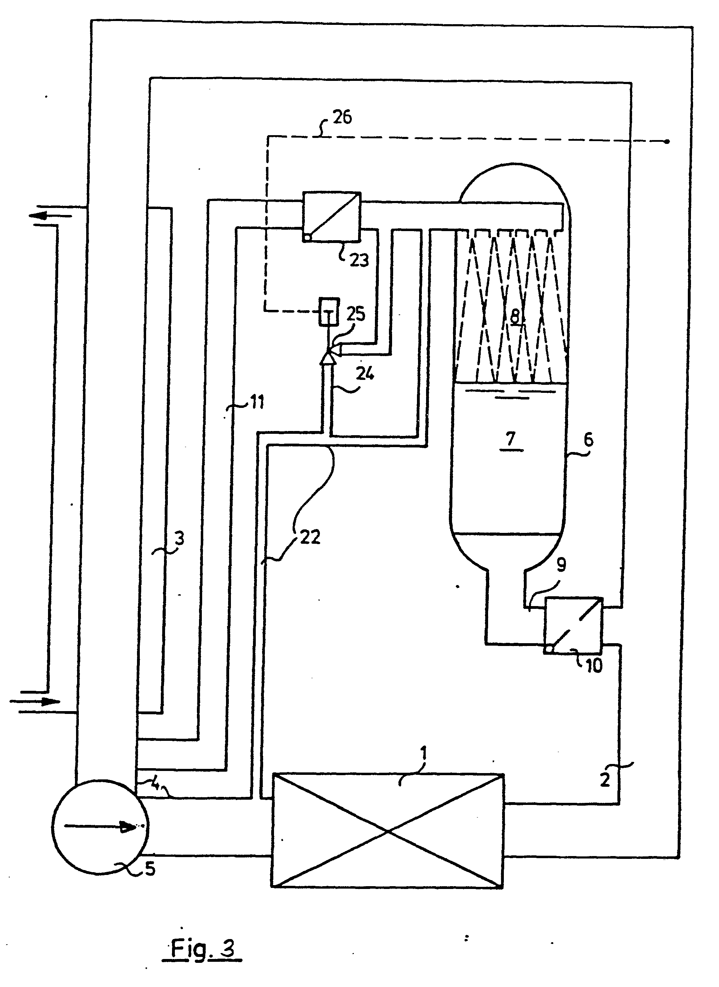

Gemäß Fig. 3 zweigt die Sprühleitung 11 saugseitig der Primärkühlmittelpumpe 5 und die als Dauersprühleitung dienende Sprühleitung 22 druckseitig derselben von der « kalten » Leitung 4 ab. In die Sprühleitung 11 ist eine in Durchflußrichtung öffnende Rückschlagklappe 23 eingebaut. Steigt bei Drucktransienten der Druck auf der Saugseite der Primärkühlmittelpumpe 5 über den Druck im Druckhalter 6, so erfolgt somit eine Einsatzsteuerung des Sprühsystems. Nach der in Fig. 3 dargestellten Ausführung führt von der druckseitig weggeführten als Dauersprühleitung ausgebildeten Sprühleitung 22 eine Verbindungsleitung 24 zur saugseitig weggeführten Sprühleitung 11. Die Verbindungsleitung 24 ist zwischen der Rückschlagklappe 23 und der Einmündungsstelle der Sprühleitung 22 in die Sprühleitung 11 eingebunden. Das druckabhängig gesteuerte Ventil 25 ist durch die Druckmessung 26 mit dem Primärsystem verbunden. Der Ansprechdruck des Ventils ist so eingestellt, daß es bei geschlossener Rückschlagklappe 23 eine Feinregulierung der Druckhaltersprühung ermöglicht.

Durch das vorgeschlagene Druckhaltesystem wird eine optimale Druckhaltersprühung erzielt, da durch eine teilweise Übernahme der Volumenausgleichsfunktion der in den Wasserraum 7 mündenden Einspeiseleitung 9 zu einer Verringerung des Druckaufbaues im Druckhalter 6 bei Druckanstiegstransienten beiträgt.

Bezugszeichenliste

| 1 | Reaktorkern |
|---|---|
| 2 | « heiße » Leitung |
| 3 | Dampferzeuger |
| 4 | « kalte » Leitung |
| 5 | Primärkühlmittelpumpe |
| 6 | Druckhalter |
| 7 | Wasserraum |
| 8 | Dampfraum |
| 9 | Einspeiseleitung |
| 10 | durchbohrte Rückschlagklappe |
| 11, 22 | Sprühleitung |
| 11a, b, c | Teilstrang |
| 12, 13, 14, 25 | Ventil |
| 20 | Bypaßleitung |

17, 18, 19, 26 Druckmessung
21          Venturirohr
23          Rückschlagklappe
24          Verbindungsleitung

## Patentansprüche

1. Druckhaltesystem einer Druckwasserreaktoranlage mit einem Druckhalter (6), der einen Wasser- (7) und einen Dampfraum (8) aufweist, wobei der Wasserraum mit einer von einem Reaktordruckbehälter (1) zu einem Dampferzeuger (3) führenden Primärkühlmittelleitung (« heiße » Leitung) (2) über eine Einspeiseleitung (9) und der Dampfraum mit einer vom Dampferzeuger zum Reaktordruckbehälter führenden Primärkühlmittelleitung (« kalte » Leitung) (4) über eine Sprühleitung (11) verbunden ist, wobei die Durchflußmenge der Einspeiseleitung (9) in Richtung Druckhalter (6) gedrosselt ist, und wobei zwischen der « kalten » Leitung (4) und dem Druckhalter (6) eine kontinuierlich in den Dampfraum (8) sprühende Verbindung (20) vorgesehen ist, dadurch gekennzeichnet, daß der durch die Drosselung vorhandene Überschuß an Primärkühlmittel wenigstens teilweise über die von der « kalten » Leitung (4) wegführende Sprühleitung (11) in den Dampfraum des Druckhalters geleitet wird, daß die Sprühleitung (11) mehrere Teilstränge (11a, 11b, 11c) unterschiedlichen Querschnitts aufweist, daß jeder dieser Teilstränge (11à, 11b, 11c) mit einem Ventil (12, 13, 14) versehen ist, das in Abhängigkeit des in der « heißen » Leitung (2) herrschenden Druckes steuerbar ist und daß die Teilstränge vor Erreichen des Druckhalters (6) wieder als eine gemeinsame Sprühleitung (11) fortgeführt sind.

2. Druckhaltesystem nach Anspruch 1, dadurch gekennzeichnet, daß die Ventile (12, 13, 14) als Sicherheitsventile (12a, 13a, 14a) ausgebildet sind.

3. Druckhaltesystem nach Anspruch 1, dadurch gekennzeichnet, daß die Durchflußmenge der Einspeiseleitung (9) derart eingestellt ist, daß der über das Sprühsystem in den Druckhalter eingesprühte Anteil so viel Dampf kondensiert, daß der noch über die Einspeiseleitung in den Druckhalter gelangende Anteil ohne Druckanstieg aufgenommen wird.

4. Druckhaltesystem einer Druckwasserreaktoranlage mit einem Druckhalter (6), der einen Wasser- (7) und einen Dampfraum (8) aufweist, wobei der Wasserraum mit einer von einem Reaktordruckbehälter (1) zu einem Dampferzeuger (3) führenden Primärkühlmittelleitung (« heiße » Leitung) (2) über eine Einspeiseleitung (9) und der Dampfraum mit einer vom Dampferzeuger zum Reaktordruckbehälter führenden Primärkühlmittelleitung (« kalte » Leitung) (4) über eine Sprühleitung verbunden ist, wobei die Druchflußmenge der Einspeiseleitung (9) in Richtung Durckhalter (6) gedrosselt ist, und wobei zwischen der « kalten » Leitung (4) und dem Druckhalter (6) eine kontinuierlich in den Dampfraum (8) sprühende Verbindung (22) vorgesehen ist, dadurch gekennzeichnet, daß eine Sprühleitung (11) saugseitig und die Sprühleitung (22) druckseitig einer Primärkühlmittelpumpe (5) von der « kalten » Leitung (4) weggeführt ist, daß in der saugseitig weggeführten Sprühleitung (11) eine Rückschlagklappe (23) vorgesehen ist, daß die druckseitig weggeführte Sprühleitung (22) in Durchflußrichtung gesehen hinter der Rückschlagklappe mit der saugseitig weggeführten Sprühleitung (11) verbunden ist, daß zwischen der saug- und der druckseitig weggeführten Sprühleitung (11, 22) eine Verbindungsleitung (24) vorgesehen ist, die zwischen der Einmündung der Sprühleitung (22) und der Rückschlagklappe (23) in die saugseitig weggeführte Sprühleitung (11) eingebunden ist, und daß in die Verbindungsleitung (24) ein vom Druck des in der « heißen » Leitung strömenden Mediums gesteuertes Ventil (25) eingebaut ist.

## Claims

1. Pressuriser system of a pressurised-water reactor installation, with a pressuriser (6) having a water space (7) and a vapour space (8), the water space being connected via a feed line (9) to a primary coolant line (« hot » line) (2) leading from a reactor pressure vessel (1) to a steam generator (3), and the vapour space being connected via a spray line (11) to a primary coolant line (« cold » line) (4) leading from the steam generator to the reactor pressure vessel, the flow rate of the feed line (9) in the direction of the pressuriser (6) being restricted, and a connection (20), which continuously sprays into the vapour space (8), being provided between the « cold » line (4) and the pressuriser (6), characterised in that the excess of primary coolant, present due to the restriction, is at least partially passed into the vapour space of the pressuriser via the spray line (11) leading away from the « cold » line (4), that the spray line (11) comprises several part legs (11a, 11b, 11c) of different cross-sections, that each of these part legs (11a, 11b, 11c) is provided with a valve (12, 13, 14) which is controllable as a function of the pressure prevailing in the « hot » line (2), and that the part legs are continued again as a common spray line (11) before the pressuriser (6) is reached.

2. Pressuriser system according to claim 1, characterised in that the valves (12, 13, 14) are constructed as safety valves (12a, 13a, 14a).

3. Pressuriser system according to claim 1, characterised in that the flow rate of the feed line (9) is set such that the proportion sprayed via the spray system into the pressuriser condenses such a quantity of vapour that the proportion still passing via the feed line into the pressuriser is taken up without a pressure rise.

4. Pressuriser system of a pressurised-water reactor installation, with a pressuriser (6) having a water space (7) and a vapour space (8), the water space being connected via a feed line (9) to a primary coolant line (« hot » line) (2) leading from a reactor pressure vessel (1) to a steam generator (3), and the vapour space being connected via a spray line to a primary coolant line (« cold » line) (4) leading from the steam generator to the reactor pressure vessel, the flow rate of the feed line (9) in the direction of the pressuriser (6) being restricted, and a connection (22), which continuously sprays into the vapour space (8), being provided between the « cold » line (4) and the pressuriser (6), characterised in that a spray line (11) leads away from the « cold » line (4) on the suction side of a primary coolant pump (5) and the spray line (22) leads away on the delivery side of the pump, that a non-return flap (23) is provided in the spray line (11) leading away on the suction side, that the spray line (22) leading away on the delivery side is connected, in terms of the direction of flow, downstream of the non-return flap to the spray line (11) leading away on the suction side, that, between the spray lines (11, 22) leading away on the suction side and delivery side, a connecting line (24) is provided which is tied between the junction of the spray line (22) and the non-return flap (23) into the spray line (11) leading away on the suction side, and that a valve (25) controlled by the pressure of the medium flowing in the « hot » line is installed in the connecting line (24).

**Revendications**

1. Système de retenue de pression d'une installation de réacteur à eau sous pression comportant un réservoir de pression (6) qui présente un volume d'eau (7) et un volume de vapeur (8), le volume d'eau étant relié par une conduite d'alimentation (9) à une conduite d'agent réfrigérant primaire (conduite « chaud ») (2) menant d'un réservoir de pression du réacteur (1) à une chaudière à vapeur (3) et le volume de vapeur étant relié par une conduite de pulvérisation (11) à une conduite d'agent réfrigérant primaire (conduite « froid ») (4) menant de la chaudière à vapeur au réservoir de pression du réacteur, le débit de la conduite d'alimentation (9) en direction du réservoir de pression (6) étant étranglé, et une liaison (20), pulvérisant en permanence dans le volume de vapeur (8), étant prévue entre la conduite « froid » (4) et le réservoir de pression (6), caractérisé par le fait que l'excédent d'agent réfrigérant primaire, dû à l'étranglement, est conduit, en partie du moins, par la conduite de pulvérisation (11), en provenance de la conduite « froid » (4) dans le volume de vapeur du réservoir de pression par le fait que la conduite de pulvérisation (11) présente plusieurs voies de partage (11a, 11b, 11c) de différents diamètres, par le fait que chacune de ces voies de partage (11a, 11b, 11c) est pourvue d'une soupape (12, 13, 14) commandable en fonction de la pression régnant dans le circuit « chaud » (2) et par le fait que les voies de partage sont à nouveau prolongées comme une simple conduite de pulvérisation (11) avant d'atteindre le réservoir de pression (6).

2. Système de retenue de pression selon la revendication 1, caractérisé par le fait que les soupapes (12, 13, 14) sont conçues comme des soupapes de sécurité (12a, 13a, 14a).

3. Système de retenue de pression selon la revendication 1, caractérisé par le fait que le débit de la conduite d'alimentation (9) est ajusté de telle sorte que la quantité pulvérisée dans le réservoir de pression au moyen du système de pulvérisation condense une quantité si élevée de vapeur que la quantité arrivant encore par l'intermédiaire de la conduite d'alimentation dans le réservoir de pression est reçue sans augmentation de pression.

4. Système de retenue de pression d'une installation de réacteur à eau sous pression comportant un réservoir de pression (6) qui présente un volume d'eau (7) et un volume de vapeur (8), le volume d'eau étant relié par une conduite d'alimentation (9) à une conduite d'agent réfrigérant primaire (conduite « chaud ») (2) menant d'un réservoir de pression du réacteur (1) à une chaudière à vapeur (3), le volume de vapeur étant relié par une conduite de pulvérisation à une conduite d'agent réfrigérant primaire (conduite « froid ») (4) menant de la chaudière à vapeur au réservoir de pression du réacteur, le débit de la conduite d'alimentation (9) en direction du réservoir de pression (6) étant étranglé et une liaison (22) pulvérisant en permanence dans le volume de vapeur (8) étant prévue entre la conduite « froid » (4) et le réservoir de pression (6), caractérisé par le fait qu'une conduite de pulvérisation aspirante (11) et la conduite de pulvérisation refoulante (22) d'une pompe de réfrigérant primaire (5) partent de la conduite « froid » (4), par le fait qu'un clapet de retenue (23) est prévu dans la conduite de pulvérisation aspirante (11), par le fait que la conduite de pulvérisation refoulante (22), vue en direction du débit est reliée derrière le clapet de retenue à la conduite de pulvérisation aspirante (11), par le fait qu'une canalisation de liaison (24) est prévue entre les conduites de pulvérisation aspirante et refoulante (11, 22), cette canalisation étant reliée à la conduite de pulvérisation aspirante (11) entre l'entrée de la conduite de pulvérisation (22) et le clapet de retenue (23), et par le fait que dans la conduite de liaison (24) est installée une soupape (25) commandée par la pression du courant circulant dans la conduite « chaud ».

Fig. 1

Fig. 2

Fig. 3